# EUROPEAN PATENT APPLICATION

(11) **EP 3 825 865 A2**
(43) Date of publication of application: **26.05.2021**
(21) Application number: 21165050.2
(22) Date of filing: 25.03.2021
(51) Int. Cl.: G06F 16/23

(54) **METHOD AND APPARATUS FOR PROCESSING DATA**

(30) Priority: 28.06.2020 CN 202010599759
(71) Applicant: Beijing Baidu Netcom Science and Technology Co., Ltd., Beijing 100085 (CN)
(72) Inventor: WANG, Xinxing, Haidian, Beijing 100085 (CN)
(74) Representative: Richly & Ritschel Patentanwälte PartG mbB

(57) **Abstract**

The present disclosure discloses a method and apparatus for processing data, relates to the field of cloud computing technology. A specific embodiment includes: searching an range information set for range information overlapping with range information in the read request, if a response to a read request is not received from a first device in a device cluster; determining a data identifier as a target identifier, based on a search result, in data identifiers of range information in the range information set; and generating a retrying read request including the target identifier, and sending the retrying read request to a device other than the first device in the device cluster. The present disclosure may find the target identifier by determining the range information overlapping with the range information of the requested data, and then request the data again using the target identifier, avoiding the problem of not being able to acquire the data caused by only using the data identifier of the latest data to make a request in related technologies, improving the success rate of data acquisition.

## Description

### TECHNICAL FIELD

Embodiments of the present disclosure relate to the field of computer technology, in particular to the field of cloud computing technology, and more particular to a method and apparatus for processing data.

### BACKGROUND

Many users use terminal devices with limited storage space. Therefore, many data related to these terminal devices cannot be stored locally, but need to be stored in electronic devices with large storage space and high throughput, such as a server database.

When the terminal device used by the user needs to use data stored in other electronic devices, the data in these electronic devices needs to be read. In related technologies, these electronic devices may not store the latest data due to various reasons.

### SUMMARY

A method, apparatus, electronic device, and storage medium for processing data are provided.

According to a first aspect, there is provided a method for processing data, including: searching an range information set for range information overlapping with range information in the read request, if a response to a read request is not received from a first device in a device cluster, the range information being used to represent an attribute of data and comprising a data identifier, each device in the device cluster storing a copy of data requested by the read request, and different data identifiers corresponding to copies updated at different times; determining a data identifier as a target identifier, based on a search result, in data identifiers of range information in the range information set; and generating a retrying read request comprising the target identifier, and sending the retrying read request to a device other than the first device in the device cluster.

According to a second aspect, there is provided a data processing device, including: a search unit, configured to search an range information set for range information overlapping with range information in the read request, if a response to a read request is not received from a first device in a device cluster, the range information being used to represent an attribute of data and comprising a data identifier, each device in the device cluster storing a copy of data requested by the read request, and different data identifiers corresponding to copies updated at different times; a determination unit, configured to determine a data identifier as a target identifier, based on a search result, in data identifiers of range information in the range information set; and a generation unit, configured to generate a retrying read request comprising the target identifier, and send the retrying read request to a device other than the first device in the device cluster.

According to a third aspect, there is provided an electronic device, including: one or more processors; a storage device, for storing one or more programs, where when one or more programs, when executed by one or more processors, cause the one or more processors to implement the method in any embodiment of the method for processing data.

According to a fourth aspect, there is provided a computer-readable storage medium having a computer program stored thereon, where when the program is executed by a processor, the method according to any one of embodiments of the method for processing data is implemented.

According to a fifth aspect, an embodiment of the present disclosure provides a computer program, and the computer program, when executed by a computer, causes the computer to perform the method as described in any of the implementations of the first aspect.

According to the solution of the present disclosure, the target identifier may be found by determining the range information overlapping with the range information of the requested data, and then the data is requested again using the target identifier, avoiding the problem of not being able to acquire the data caused by only using the data identifier of the latest data to make a request in related technologies, improving the success rate of data acquisition. Moreover, when data is updated, usually only part of the data content is updated, and a large amount of data content in the latest data is consistent with the original data. Therefore, even if the latest data are not used, the accuracy of the acquired data may be ensured to a certain extent.

### BRIEF DESCRIPTION OF THE DRAWINGS

By reading the detailed description of nonlimiting embodiments with reference to the following accompanying drawings, other features, objectives and advantages of the present disclosure will become more apparent:
Fig. 1 is an example system architecture diagram in which some embodiments of the present disclosure may be implemented;
Fig. 2 is a flowchart of an embodiment of a method for processing data according to the present disclosure;
Fig. 3 is a schematic diagram of an application scenario of the method for processing data according to the present disclosure;
Fig. 4 is a flowchart of another embodiment of the method for processing data according to the present disclosure;
Fig. 5 is a schematic structural diagram of an embodiment of an apparatus for processing data according to the present disclosure; and
Fig. 6 is a block diagram of an electronic device adapted to implement the method for processing data according to an embodiment of the present disclosure.

### DETAILED DESCRIPTION OF EMBODIMENTS

The following describes example embodiments of the present disclosure with reference to the accompanying drawings, which include various details of the embodiments of the present disclosure to facilitate understanding, and should be regarded as merely example. Therefore, those of ordinary skill in the art should realize that various changes and modifications may be made to the embodiments described herein without departing from the scope and spirit of the present disclosure. Likewise, for clarity and conciseness, descriptions of well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

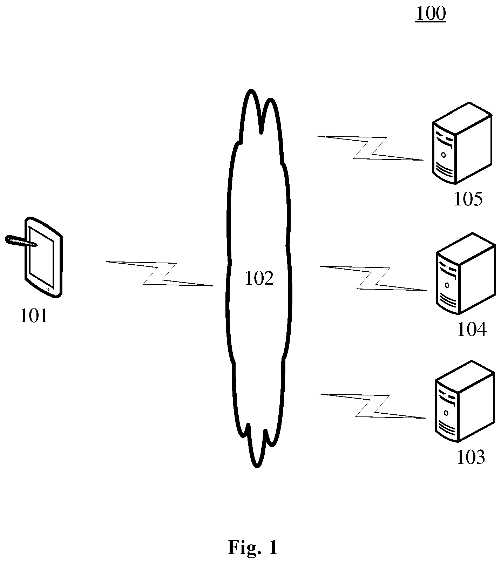

Fig. 1 illustrates an example system architecture 100 of an embodiment of a method for processing data or an apparatus for processing data in which the present disclosure may be implemented.

As shown in Fig. 1, the system architecture 100 may include a terminal device 101, a network 102, and servers 103, 104 and 105. The network 102 is used to provide a communication link medium between the terminal device 101 and the servers 103, 104 and 105. The network 102 may include various types of connections, such as wired, wireless communication links, or optic fibers.

A user may interact with the servers 103, 104 and 105 through the network 102 using the terminal device 101, to receive or send messages and the like. Various communication client applications, such as video applications, live broadcast applications, instant messaging tools, email clients, or social platform software, may be installed on the terminal device 101.

The terminal device 101 may be hardware or software. When the terminal device 101 is hardware, it may be various electronic devices having display screens, including but not limited to smart phones, tablet computers, E-book readers, laptop portable computers, desktop computers, or the like. When the terminal device 101 is software, it may be installed in the electronic devices listed above. The software may be implemented as a plurality of software pieces or software modules (for example, a plurality of software pieces or software modules for providing distributed services), or as a single software piece or software module, which is not specifically limited herein. The terminal device 101 may send a read request to the server 103, and may send a retrying read request to the server 104 or 105 in the absence of a response to the read request.

The servers 103, 104, and 105 may be servers that provide various services, for example, backend servers that provide support for the terminal device 101. The backend server may process such as analyze received data such as the retrying read request, and feed back a processing result to the terminal device. The servers 103, 104, 105 may form a device cluster.

It should be noted that the method for processing data provided by the embodiments of the present disclosure may be performed by the servers 103, 104, 105 or the terminal device 101, and accordingly, the apparatus for processing data may be provided in the servers 103, 104, 105 or the terminal device 101.

It should be understood that the number of terminal devices, networks, and servers in Fig. 1 is merely illustrative. Depending on the implementation needs, there may be any number of terminal devices, networks, and servers.

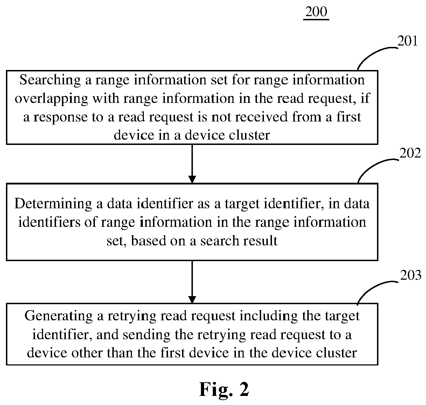

With further reference to Fig. 2, a flow 200 of an embodiment of a method for processing data according to the present disclosure is illustrated. The method for processing data includes the following steps 201 to 203.

Step 201 includes searching a range information set for range information overlapping with range information in the read request, if a response to a read request is not received from a first device in a device cluster, the range information being used to represent an attribute of data and including a data identifier, each device in the device cluster storing a copy of data requested by the read request, and different data identifiers corresponding to copies updated at different times.

In the present embodiment, an executing body (for example, the server or terminal device shown in Fig. 1) on which the method for processing data is run may send a data read request to the first device in the device cluster, and in the case of no response is received, search the range information set for the range information overlapping with the range information in the read request. The device cluster includes a plurality of electronic devices, where the first device of the device cluster refers to the electronic device requested by the read request, and is configured to feed back data requested by the read request to the executing body. Each device in the device cluster may store a copy of the data requested by the read request. In practice, after receiving a write request from the terminal device, the successful update of data of most devices in the device cluster may be considered as a successful execution of the write operation. Therefore, the update time of data on different devices in the device cluster may be different. Accordingly, there may be differences between copies stored on different devices.

Specifically, the range information may be used to represent the attribute of the data. Specifically, the range information may include the data identifier (ID). In addition, the range information may also include other information indicating the attribute of the data, such as an offset of the data and/or a length of the data.

In practice, the overlapping between the range information may refer to an intersection, that is, overlap, between information other than the data identifier in the range information. For example, the overlapping between two pieces of range information may indicate that the offsets of the two pieces of range information are within a given preset offset interval.

Different data identifiers correspond to the data updated at different times. For example, the data identifier of data updated at 10 o'clock is serial number 32, and the data is updated again at 17 o'clock, and the data identifier of the data updated again is serial number 33.

Step 202 includes determining a data identifier as a target identifier, in data identifiers of range information in the range information set, based on a search result.

In practice, the executing body may determine the data identifier of at least one piece of range information in the data identifiers of pieces of range information in the range information set based on the search result, and use the determined data identifier as the target identifier. The executing body may determine a target identifier for each data requested in the read request. Specifically, the data identifier of the range information is the data identifier included in the range information.

Step 203 includes generating a retrying read request including the target identifier, and sending the retrying read request to a device other than the first device in the device cluster.

In the present embodiment, the executing body may generate the retrying read request (backup read request) using the target identifier, and send the retrying read request to at least one device other than the first device in the device cluster. Specifically, the retrying read request may include the target identifier. The retrying read request may be send to other devices in the device cluster when the first device does not respond, to continue to try to read data from the device cluster.

According to the method provided by the above embodiment of the present disclosure, the target identifier may be found by determining the range information overlapping with the range information of the requested data, and then data is requested again using the target identifier, avoiding the problem of not being able to acquire the data caused by only using the data identifier of the latest data to make a request in related technologies, improving the success rate of data acquisition. Moreover, when data is updated, usually only a part of the data content is updated, and a large amount of data content in the latest data is consistent with the original data. Therefore, even if the latest data is not used, the accuracy of the acquired data may be ensured to a certain extent.

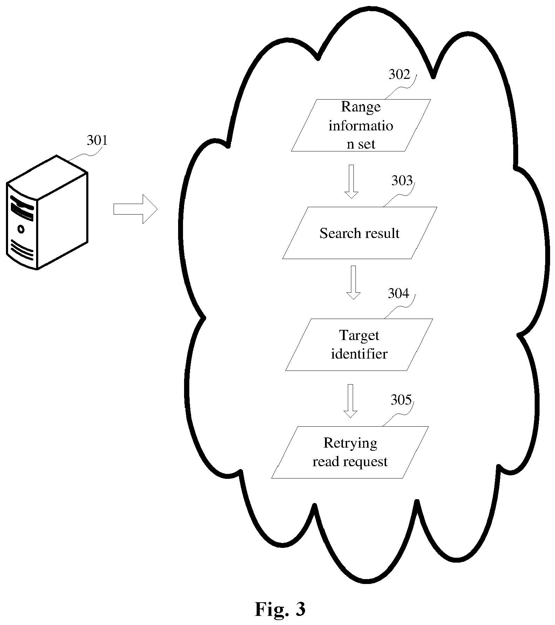

With further reference to Fig. 3, Fig. 3 is a schematic diagram of an application scenario of the method for processing data according to the present embodiment. In the application scenario of Fig. 3, if an executing body 301 does not receive a response to a read request from device A in a device cluster, the executing body searches range information set 302 for range information overlapping with range information in the read request, where the range information is used to represent an attribute of data and includes a data identifier. Each device in the device cluster stores a copy of data requested by the read request. The device cluster includes device A, device B, and device C. Different data identifiers correspond to copies updated at different times. Based on a search result 303, the executing body 301 determines a data identifier as a target identifier 304 from data identifiers of pieces of range information in the range information set. The executing body 301 generates a retrying read request 305 including the target identifier 304, and sends the retrying read request 305 to the above device B.

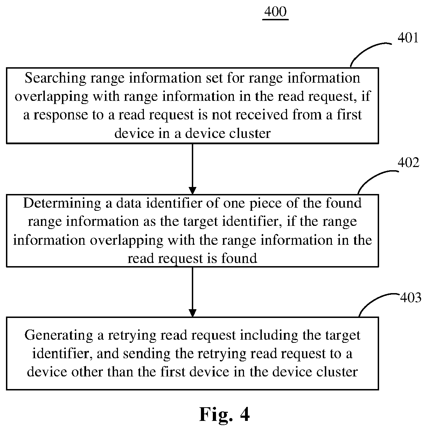

With further reference to Fig. 4, a flow 400 of another embodiment of the method for processing data is illustrated. The flow 400 includes the following steps 401 to 403.

Step 401 includes searching range information set for range information overlapping with range information in the read request, if a response to a read request is not received from a first device in a device cluster, the range information being used to represent an attribute of data and including a data identifier, each device in the device cluster storing a copy of data requested by the read request, and different data identifiers corresponding to copies updated at different times.

In the present embodiment, an executing body (for example, the server or terminal device shown in Fig. 1) on which the method for processing data operates may send a data read request to the first device in the device cluster, and in the case of no response is received, search the range information set for the range information overlapping with the range information in the read request.

Step 402 includes determining a data identifier of one piece of the found range information as the target identifier, if the range information overlapping with the range information in the read request is found.

In practice, the executing body may determine the data identifier of one piece of the found range information as the target identifier, if the range information overlapping with the range information in the read request is found. In practice, the executing body may use various methods to determine one piece of the range information. For example, the executing body may randomly determine a data identifier from the data identifiers of the found range information as the target identifier.

Step 403 includes generating a retrying read request including the target identifier, and sending the retrying read request to a device other than the first device in the device cluster.

In the present embodiment, the executing body may generate the retrying read request using the target identifier, and send the retrying read request to at least one device other than the first device in the device cluster. Specifically, the retrying read request may include the target identifier. The retrying read request may be send to other devices in the device cluster when the first device does not respond, to continue to try to read data.

In the present embodiment, the data identifier of one piece of the range information overlapping with the range information of the read request may be used as the target identifier, thereby improving the success rate of data acquisition while ensuring the accuracy of data acquisition.

In some alternative implementations of the present embodiment, the determining a data identifier of one piece of the found range information as the target identifier in step 402, may include: determining the data identifier in the found range information as the target identifier, in response to the number of the piece of the found range information being one; determining a data identifier having a largest serial number as the target identifier, from data identifiers of the found range information, in response to the number of the pieces of the found range information being at least two.

In these alternative implementations, the data identifier may include a serial number. The executing body may determine the data identifier of one piece of the found range information as the target identifier when only one piece of the range information is found. In addition, the executing body may determine the data identifier having the largest serial number as the target identifier from the data identifier of the found range information, when a plurality of pieces of range information are found. The serial number of the data identifier increases in sequence according to the time sequence of data update. The larger the serial number of the data identifier is, the newer the data corresponding to the data identifier is.

In these implementations, when a plurality of pieces of range information are found, the data identifier of the piece of the range information of the latest data may be selected, thereby ensuring the instantaneity of the acquired data.

In some alternative implementations of any one of the above embodiments, the range information set includes range information of copies obtained by locally updating multiple times a designated data in a target historical period, a copy for one of the updates being a copy indicated by the target identifier; the determining a data identifier as a target identifier from data identifiers of pieces of range information in the range information set, based on a search result, may include: selecting a data identifier having a smallest serial number as the target identifier, from the range information set, if no range information overlapping with the range information in the read request is found.

In these implementations, the target historical period may be an acquired previous preset period, using the current time or a moment before the current time as a time termination point, such as within the past week. The designated data may be various data on the executing body, such as data associated with a certain application or several applications installed in the executing body. The executing body may determine a data identifier of range information of the oldest data from the range information set as the target identifier when the overlapping range information is not found.

These implementations may select the data identifier of the range information of the oldest data in the range information set, when range information overlapping the range information in the read request is not found, so as to avoid data acquisition failure caused by the case that data in the device storing the data is not newly updated data.

In some alternative implementations of any one of the above embodiments, the range information may further include an offset and a length of the data; the searching an range information set for range information overlapping with an range information in the read request, may include: using the designated range information as the range information overlapping with the range information in the read request, in response to a presence of designated range information in the range information set, where an offset in one of the designated range information and the range information in the read request is greater than or equal to an offset in the other one, and the offset in one of the designated range information and the range information in the read request is smaller than a sum of the offset and a length in the other one.

In these implementations, the executing body may search the range information set for the designated range information, and use the designated range information as the search result. Specifically, if the executing body determines that range information in the range information set meets the following conditions, the range information meeting the conditions may be determined as the designated range information: for the range information and the range information in the read request, the offset in one is greater than or equal to the offset in the other one, and the offset in one is smaller than the sum of the offset and the length in the other one.

For example, the range information E1 is ID=1, offset1=8kb, and length1=8kb. The range information E4 is ID=4, offset4=12kb, and length4=4kb. Here, offset4≥offset1, and offset4<(offset1+length1), therefore, there is an overlap between the range information E1 and the range information E4.

As another example, the range information E3 is ID=3, offset3=8kb, and length3=4kb. The range information E4 is ID=4, offset4=12kb, and length4=4kb. Here, offset4≥offset3, but offset4=(offset3+length3), does not meet a requirement that offset4 is smaller than (offset3+length3). Therefore, there is no overlap between the range information E3 and the range information E4.

These implementations may accurately determine overlapping pieces of range information based on the offset and length in the pieces of range information.

In some alternative implementations of any one of the above embodiments, the method may further include: adding an range information in the write request to the local range information set, in response to generating a write request for any device in the device cluster.

In these implementations, the executing body may generate the write request sent to the devices in the device cluster, where the write request includes range information of data (such as the above designated data). Once the executing body generates the write request, the range information in the write request may be added to the local range information set, so that each data update may be recorded in the locally maintained range information set to facilitate finding the target identifier and proceeding the retrying read request.

In some alternative application scenarios of these implementations, the method also includes: searching the range information set for range information overlapping with the range information in the write request, in response to generating the write request for any device in the device cluster; using the found range information overlapping with the range information in the write request as a to-be-updated range information, if the range information overlapping with the range information in the write request is found; deleting from the to-be-updated range information a portion overlapping the range information in the write request to obtain a processed range information, for the to-be-updated range information; and updating the to-be-updated range information in the range information set to the processed range information.

In these alternative application scenarios, the executing body may not only add the range information in the write request to the range information set, but also update the original range information in the range information set based on the range information in the write request. Specifically, the executing body may search the range information set for the range information overlapping with the range information in the write request when the write request is locally generated. The executing body may search using the method for searching for range information overlapping with the range information in the read request. If the overlapping range information is not found, the executing body may not update the original range information in the range information set. If the overlapping range information is found, the executing body may remove a portion of the found to-be-updated range information. Specifically, the executing body may delete from the to-be-updated range information a portion overlapping the range information in the write request, and a result of the deletion is the processed range information. Then, the executing body may update the to-be-updated range information in the range information set to the processed range information, and an update result is the processed range information.

For example, the to-be-updated range information E1 is ID=1, offset1=8kb, and length1=8kb. The range information in the write request E4 is ID=4, offset4=12kb, and length4=4kb. The overlap portion between E1 and E4 is offset=12kb and length=4kb. The executing body deletes the overlap portion from the to-be-updated range information E1, and the obtained processed range information is ID=1, offset1=8kb, and length1=4kb.

These implementations may delete the range information overlapping the range information added to the range information set to achieve deduplication of data range information and avoid reading repeated data.

In some alternative implementations of any one of the above embodiments, the device cluster includes a distributed device, the distributed device includes a master device and at least two slave devices; the first device includes the master device, or the master device and at least one slave device.

In these alternative implementations, the electronic devices in the device cluster may be distributed. Specifically, these electronic devices may include one master device and at least two slave devices. If the executing body has sent the read request to the master device or to the master device and a slave device, and has not received response information, the executing body may send the retrying read request to another device.

For example, the device cluster may include one master device and two slave devices. The executing body may first send a read request to the master device. If no response is received, the executing body may send a retrying read request to at least one of the two slave devices.

These implementations may send the retrying read request to another slave device to reacquire data when the master device or the master device and some slave device in the distributed device cannot respond to the read request. In this regard, even if data of the another slave device is not the latest updated data, the executing body may still acquire the data.

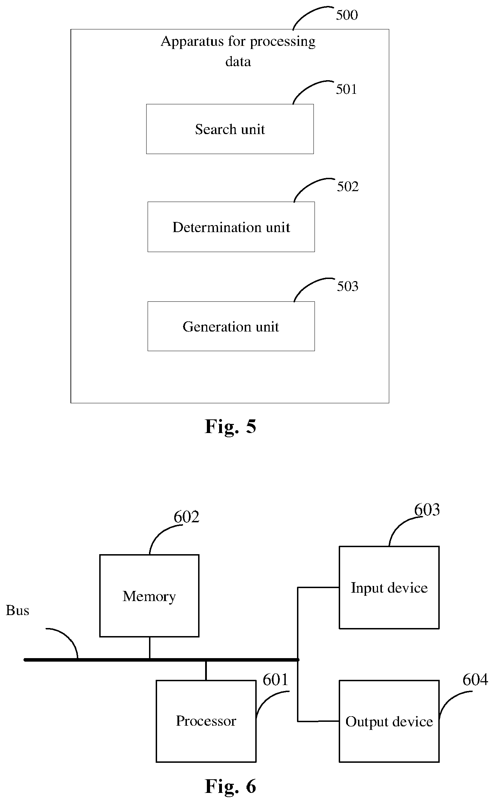

With further reference to Fig. 5, as an implementation of the method shown in the above figures, the present disclosure provides an embodiment of an apparatus for processing data, and the apparatus embodiment corresponds to the method embodiment as shown in Fig. 2. In addition to the features described below, the apparatus embodiment may also include the same or corresponding features or effects as the method embodiment shown in Fig. 2. The apparatus may be specifically applied to various electronic devices.

As shown in Fig. 5, an apparatus 500 for processing data of the present embodiment includes: a search unit 501, a determination unit 502 and a generation unit 503. The search unit 501 is configured to search an range information set for range information overlapping with range information in the read request, if a response to a read request is not received from a first device in a device cluster, the range information being used to represent an attribute of data and including a data identifier, each device in the device cluster storing a copy of data requested by the read request, and different data identifiers corresponding to copies updated at different times. The determination unit 502 is configured to determine a data identifier as a target identifier, based on a search result, in data identifiers of range information in the range information set. The generation unit 503 is configured to generate a retrying read request including the target identifier, and send the retrying read request to a device other than the first device in the device cluster.

In the present embodiment, in the apparatus 500 for processing data: for the specific processing and technical effects of the search unit 501, the determination unit 502 and the generation unit 503, reference may be made to the relevant descriptions of step 201, step 203 and step 203 in the corresponding embodiment of Fig. 2 respectively, and detailed description thereof will be omitted.

In some alternative implementations of the present embodiment, the determination unit is further configured to determine a data identifier as a target identifier, based on a search result, in data identifiers of range information in the range information set as follows: determining a data identifier of one piece of found range information as the target identifier, if the range information overlapping with the range information in the read request is found.

In some alternative implementations of the present embodiment, the determination unit is further configured to determine a data identifier of one piece of found range information as the target identifier as follows: determining a data identifier having a largest serial number as the target identifier, from data identifiers of the found range information, in response to the number of pieces of the found range information being at least two.

In some alternative implementations of the present embodiment, the range information set includes range information of copies obtained by locally updating multiple times a designated data in a target historical period, a copy for one of the updates being a copy indicated by the target identifier; the determination unit is further configured to determine a data identifier as a target identifier from data identifiers of pieces of range information in the range information set, based on a search result, as follows: selecting a data identifier having a smallest serial number as the target identifier, from the range information set, if no range information overlapping with the range information in the read request is found.

In some alternative implementations of the present embodiment, the range information further includes an offset and a length of the data; the search unit is further configured to search an range information set for range information overlapping with range information in the read request as follows: using the designated range information as the range information overlapping with the range information in the read request, in response to a presence of a designated range information in the range information set, where an offset in one of the designated range information and the range information in the read request is greater than or equal to an offset in the other one, and the offset in one of the designated range information and the range information in the read request is smaller than a sum of the offset and a length in the other one.

In some alternative implementations of the present embodiment, the apparatus further includes: an adding unit, configured to add range information in the write request to the local range information set, in response to generating a write request for any device in the device cluster.

In some alternative implementations of the present embodiment, the apparatus further includes: a first execution unit, configured to search the range information set for an range information overlapping with the range information in the write request, in response to generating the write request for any device in the device cluster; a second execution unit, configured to use found range information overlapping with the range information in the write request as a to-be-updated range information, if the range information overlapping with the range information in the write request is found; a deletion unit, configured to delete from the to-be-updated range information a portion overlapping the range information in the write request to obtain a processed range information, for the to-be-updated range information; and an update unit, configured to update the to-be-updated range information in the range information set to the processed range information.

In some alternative implementations of the present embodiment, the device cluster includes a distributed device, the distributed device includes a master device and at least two slave devices; the first device includes the master device, or the master device and at least one slave device.

According to an embodiment of the present disclosure, the present disclosure also provides an electronic device and a readable storage medium.

Fig. 6 is a block diagram of an electronic device of the method for processing data according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including a high-speed interface and a low-speed interface. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, (for example, used as a server array, a set of blade servers, or a multi-processor system) and each device provides some necessary operations. In Fig. 6, processor 601 is used as an example.

The memory 602 is a non-transitory computer readable storage medium provided by the present disclosure. The memory stores instructions executable by at least one processor, so that the at least one processor performs the method for processing data provided by the present disclosure. The non-transitory computer readable storage medium of the present disclosure stores computer instructions for causing a computer to perform the method for processing data provided by the present disclosure.

The memory 602, as a non-transitory computer readable storage medium, may be used to store non-transitory software programs, non-transitory computer executable programs and modules, such as program instructions/modules corresponding to the method for processing data in the embodiments of the present disclosure (for example, the search unit 501, the determination unit 502 and the generation unit 503 as shown in Fig. 5). The processor 601 executes the non-transitory software programs, instructions, and modules stored in the memory 602 to execute various functional applications and data processing of the server, that is, to implement the method for processing data in the method embodiments.

The memory 602 may include a storage program area and a storage data area, where the storage program area may store an operating system and an application program required by at least one function; and the storage data area may store data created by the electronic device when executing the method for improving the model based on the pre-trained semantic model. In addition, the memory 602 may include a high-speed random access memory, and may further include a non-transitory memory, such as at least one magnetic disk storage device, a flash memory or other non-transitory solid state storage devices. In some embodiments, the memory 602 may alternatively include a memory disposed remotely relative to the processor 601, which may be connected through a network to the electronic device adapted to execute the method for improving the model based on the pre-trained semantic model. Examples of such networks include, but are not limited to, the Internet, enterprise intranets, local area networks, mobile communication networks and combinations thereof.

The memory 602 may include a storage program area and a storage data area. The storage program area may store an operating system and an application program required by at least one function; the storage data area may store data created according to the use of the data processing electronic device Wait. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include a memory remotely provided with respect to the processor 601, and these remote memories may be connected to a data processing electronic device through a network. Examples of the aforementioned networks include, but are not limited to, the Internet, corporate intranets, local area networks, mobile communication networks, and combinations thereof.

The electronic device adapted to execute the method for processing data based on the pre-trained semantic model may further include an input device 603 and an output device 604. The processor 601, the memory 602, the input device 603 and the output device 604 may be interconnected through a bus or other means, and an example of a connection through a bus is shown in Fig. 6.

The input device 603 may receive input number or character information, and generate key signal input related to user settings and functional control of the electronic device adapted to execute the method for improving the model based on the pre-trained semantic model, such as a touch screen, a keypad, a mouse, a track pad, a touch pad, a pointer bar, one or more mouse buttons, a trackball or a joystick. The output device 604 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor may be a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN) and the Internet.

The computer system may include a client and a server. The client and the server are generally remote from each other and interact generally through a communication network. The relationship between the client and the server is generated by running the computer programs having a client-server relationship with each other on the corresponding computer.

The flowcharts and block diagrams in the drawings illustrate the possible implementation architecture, functions, and operations of the system, method, and computer program product according to various embodiments of the present disclosure. In this regard, each block in the flowchart or block diagram can represent a module, program segment, or part of code, and the module, program segment, or part of code contains one or more for realizing the specified logical function Executable instructions. It should also be noted that, in some alternative implementations, the functions marked in the block may also occur in a different order from the order marked in the drawings. For example, two blocks shown in succession can actually be executed substantially in parallel, and they can sometimes be executed in the reverse order, depending on the functions involved. It should also be noted that each block in the block diagram and/or flowchart, and the combination of the blocks in the block diagram and/or flowchart, can be implemented by a dedicated hardware-based system that performs the specified functions or operations Or it can be realized by a combination of dedicated hardware and computer instructions.

The units involved in the embodiments of the present disclosure may be implemented by means of software or hardware. The described units may also be provided in a processor, for example, may be described as: a processor, including a search unit, a determination unit and a generation unit. Here, the names of these units do not in some cases constitute limitations to such units themselves. For example, the determination unit may also be described as "a unit configured to determine a data identifier as a target identifier, based on a search result, in data identifiers of range information in the range information set."

In another aspect, the present disclosure further provides a computer readable medium. The computer readable medium may be included in the apparatus in the above described embodiments, or a stand-alone computer readable medium not assembled into the apparatus. The computer readable medium stores one or more programs. The one or more programs, when executed by the apparatus, cause the apparatus to: search an range information set for an range information overlapping with range information in the read request, if a response to a read request is not received from a first device in a device cluster, the range information being used to represent an attribute of data and including a data identifier, each device in the device cluster storing a copy of data requested by the read request, and different data identifiers corresponding to copies updated at different times; determine a data identifier as a target identifier, based on a search result, in data identifiers of range information in the range information set; and generate a retrying read request including the target identifier, and send the retrying read request to a device other than the first device in the device cluster.

The above specific description is not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for processing data, the method comprising:
searching (201) an range information set for range information overlapping with range information in the read request, if a response to a read request is not received from a first device in a device cluster, the range information being used to represent an attribute of data and comprising a data identifier, each device in the device cluster storing a copy of data requested by the read request, and different data identifiers corresponding to copies updated at different times;
determining (202) a data identifier as a target identifier, based on a search result, in data identifiers of range information in the range information set; and
generating (203) a retrying read request comprising the target identifier, and sending the retrying read request to a device other than the first device in the device cluster.

2. The method according to claim 1, wherein the determining a data identifier as a target identifier, based on a search result, in data identifiers of range information in the range information set, comprises:
determining (402) a data identifier of one piece of found range information as the target identifier, if the range information overlapping with the range information in the read request is found.

3. The method according to claim 2, wherein the determining a data identifier of one piece of found range information as the target identifier, comprises:
determining a data identifier having a largest serial number as the target identifier, from data identifiers of the found range information, in response to a number of pieces of the found range information being at least two.

4. The method according to claim 1, wherein the range information set comprises range information of copies obtained by locally updating multiple times a designated data in a target historical period;
the determining a data identifier as a target identifier, based on a search result, in data identifiers of range information in the range information set, comprises:
selecting a data identifier having a smallest serial number as the target identifier, from the range information set, if no range information overlapping with the range information in the read request is found.

5. The method according to any one of claims 1 to 4, wherein the range information further comprises an offset and a length of the data;
the searching a range information set for range information overlapping with range information in the read request, comprises:
using designated range information as the range information overlapping with the range information in the read request, in response to a presence of the designated range information in the range information set, wherein an offset in one of the designated range information and the range information in the read request is greater than or equal to an offset in the other one, and the offset in one of the designated range information and the range information in the read request is smaller than a sum of the offset and a length in the other one.

6. The method according to any one of claims 1 to 5, wherein the method further comprises:
adding range information in the write request to the local range information set, in response to generating a write request for any device in the device cluster.

7. The method according to claim 6, wherein the method further comprises:
searching the range information set for range information overlapping with the range information in the write request, in response to generating the write request for any device in the device cluster;
using found range information overlapping with the range information in the write request as a to-be-updated range information, if the range information overlapping with the range information in the write request is found;
deleting from the to-be-updated range information a portion overlapping the range information in the write request to obtain a processed range information, for the to-be-updated range information; and
updating the to-be-updated range information in the range information set to the processed range information.

8. The method according to any one of claims 1 to 7, wherein the device cluster comprises a distributed device, the distributed device comprises a master device and at least two slave devices; the first device comprises the master device, or the master device and at least one slave device.

9. An apparatus for processing data, the apparatus comprising: units for performing the method according to any one of claims 1 to 8.

10. An electronic device, comprising:
one or more processors; and
a storage device, for storing one or more programs,
wherein the one or more programs, when executed by the one or more processors, cause the one or more processors to implement the method according to any one of claims 1-8.

11. A computer readable storage medium, storing a computer program, wherein the program, when executed by a processor, implements the method according to any one of claims 1-8.

12. A computer program comprising instructions which, when the program is executed by a computer, cause the computer to perform the method according to any one of claims 1 to 8.
